# EUROPÄISCHE PATENTSCHRIFT

(11) **EP 1 969 532 B1**
(45) Veröffentlichungstag und Bekanntmachung des Hinweises auf die Patenterteilung: **30.06.2010**
(21) Anmeldenummer: 06807696.7
(22) Anmeldetag: 31.10.2006
(51) Int. Cl.: G06K 19/073, G06F 12/14, G06F 3/08, B42D 15/00, G07F 7/10

(54) **DOKUMENT MIT EINEM ELEKTRONISCHEN GERÄT, VORRICHTUNG ZUM ZUGRIFF AUF EINEN DATENSPEICHER UND COMPUTERPROGRAMMPRODUKT**
DOCUMENT COMPRISING AN ELECTRONIC APPLIANCE, DEVICE FOR ACCESSING A DATA MEMORY, AND COMPUTER PROGRAM PRODUCT
DOCUMENT POURVU D'UN APPAREIL ELECTRONIQUE, DISPOSITIF POUR ACCEDER A UNE MEMOIRE DE DONNEES ET PRODUIT PROGRAMME INFORMATIQUE

(30) Priorität: 27.12.2005 DE 102005062828
(43) Veröffentlichungstag der Anmeldung: 17.09.2008
(73) Patentinhaber: Bundesdruckerei GmbH, 10958 Berlin (DE)
(72) Erfinder: DRESSEL, Olaf, 14641 Wustermark (DE); MUTH, Oliver, 12277 Berlin (DE); PFLUGHOEFFT, Malte, 13347 Berlin (DE); HOPPE, Andreas, 13347 Berlin (DE); PAESCHKE, Manfred, 16348 Wandlitz (DE)
(74) Vertreter: Richardt, Markus Albert
(86) Internationale Anmeldenummer: PCT/EP2006/067988
(87) Internationale Veröffentlichungsnummer: WO 2007/073966

(56) Entgegenhaltungen:
- WO-A-2004/100058
- DE-A1- 19 742 126
- US-A1- 2004 012 496

## Beschreibung

Die Erfindung betrifft ein Dokument mit einem elektronischen Gerät, welches insbesondere als sogenannte Chipkarte oder SmartCard in kontaktbehafteter, kontaktloser oder Dual-Interface Ausführung ausgebildet sein kann. Bei dem Dokument kann es sich zum Beispiel um einen Kartenaufbau, insbesondere einer SmartCard, handeln, oder um ein Papierdokument, wie zum Beispiel einen elektronischen Personalausweis.

Aus dem Stand der Technik sind verschiedene Funk-Erkennungssysteme bekannt, die auch als Radio Frequency Identification (RFID) Systeme bezeichnet werden. Vorbekannte RFID-Systeme beinhalten im Allgemeinen zumindest einen Transponder und eine Sende-Empfangseinheit. Der Transponder wird auch als RFID-Etikett, RFID-Chip, RFID-Tag, RFID-Label oder Funketikett bezeichnet; die Sende-Empfangseinheit wird auch als Lesegerät oder Reader bezeichnet. Ferner ist oft die Integration mit Servern, Diensten und sonstigen Systemen, wie zum Beispiel Kassensystemen oder Warenwirtschaftssystemen über eine so genannte Middle Ware vorgesehen.

Die auf einem RFID-Transponder gespeicherten Daten werden über Radiowellen verfügbar gemacht. Bei niedrigen Frequenzen geschieht dies induktiv über ein Nahfeld, bei höheren Frequenzen über ein elektromagnetisches Fernfeld. Die Entfernung, über die ein RFID-Transponder angesprochen und ausgelesen werden kann, schwankt aufgrund der Ausführung (passiv / aktiv), dem benutzten Frequenzband, der Sendestärke und anderen Umwelteinflüssen zwischen wenigen Zentimetern und mehr als einem Kilometer.

Ein RFID-Transponder beinhaltet üblicherweise einen Mikrochip und eine Antenne, die in einem Träger oder Gehäuse untergebracht oder auf ein Substrat aufgedruckt sind. Aktive RFID-Transponder verfügen ferner über eine Energiequelle, wie zum Beispiel eine Batterie.

RFID-Transponder sind für verschiedene Dokumente einsetzbar, insbesondere in Chipkarten, beispielsweise zur Realisierung einer elektronischen Geldbörse oder für Electronic Ticketing, oder werden in Papier, wie zum Beispiel in Wert- und Sicherheitsdokumenten, insbesondere Geldscheinen und Ausweisdokumenten, integriert.

Aus der DE 201 00 158 U1 ist beispielsweise eine Identifikations- und Sicherheitskarte aus laminierten und / oder gespritzten Kunststoffen bekannt, die einen integrierten Halbleiter mit einer Antenne zur Durchführung eines RFID-Verfahrens beinhaltet. Aus der DE 10 2004 008 841 A1 ist ferner ein buchartiges Wertdokument, wie zum Beispiel ein Passbuch bekannt geworden, welches eine Transpondereinheit beinhaltet.

Solche Sicherheits- oder Wertdokumente werden im Stand der Technik zum Teil als Chipkarten realisiert. Diese können mit einer kontaktbehafteten oder kontaktlosen Schnittstelle, beispielsweise einem RFID-Interface, ausgestattet sein oder mit einer Schnittstelle, die sowohl eine drahtgebundene als auch eine drahtlose Kommunikation mit einem Chipkarten-Terminal zulässt. Im letzteren Fall spricht man auch von so genannten Dual-Interface Chipkarten. Chipkarten-Kommunikationsprotokolle und - verfahren sind zum Beispiel in der Norm ISO 14443 festgelegt.

Chipkarten, insbesondere RFID Chipkarten, mit einem integrierten Druckschalter sind bereits aus dem Stand der Technik bekannt, insbesondere aus US 6 863 220 B2, WO 99/16019, EP 1 173 825 B1, DE 199 35 528 A1, DE 196 45 083 C2, EP 0 946 926 B1, EP 0 562 292 B1, EP 0 557 934 B1. Die DE 197 42 126, gegen die die Ansprüche abgegrenzt sind, beschreibt ebenfalls eine solche Karte mit einem Aktivierungsschalter in der Antennenzuleitung.

Um ein ungewolltes Auslesen der RFID Chipkarte zu verhindern, muss zunächst der Druckschalter von einem Benutzer manuell betätigt werden, so dass das Auslesen ermöglicht wird.

Aus der WO 2004/100058 ist eine RFID Chipkarte bekannt, die einen lichtempfindlichen Schalter beinhaltet, der durch eine Lichtquelle aktiviert werden kann und danach auslesbar ist.

Ferner ist aus der US 2004/0012496 A1 ein Scheck mit integriertem RFID-Chip bekannt, der durch eine Lichtquelle, die einen Fototransistor bestrahlt, aktiviert werden kann und anschließend auslesbar ist.

Der Erfindung liegt dem gegenüber die Aufgabe zu Grunde, ein verbessertes Dokument mit einem elektronischen Gerät zu schaffen sowie eine Vorrichtung zum Zugriff auf ein solchen Dokuments und ein Computerprogrammprodukt.

Die der Erfindung zu Grunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Die beanspruchte extern ansprechbare Schaltvorrichtung zur Aktivierung oder Deaktivierung des elektronischen Geräts hat gegenüber üblichen Druckschaltern den Vorteil, dass mit einer solchen Schaltvorrichtung ein zusätzliches Sicherheitsmerkmal realisierbar ist, da das Ansprechen der Schaltvorrichtung ein spezielles Gerät und/oder spezielle Kenntnisse des Benutzers erfordert.

Bei dem Dokument kann es sich beispielsweise um ein Wert- oder Sicherheitsdokument, insbesondere ein Visum, Identifikationskarte, Reisepass, Personalausweis, Führerschein, Kreditkarte, Kundenausweis, Fahrausweis, oder dergleichen handeln.

Erfindungsgemäß kann die Aktivierung oder Deaktivierung des Dokuments beispielsweise bei der Herstellung des Dokuments und / oder anlässlich der Personalisierung des Dokuments erfolgen, welche zentral oder dezentral vorgenommen werden kann.

Beispielsweise werden Rohlinge eines Identifikationsdokuments zentral hergestellt. Bei den Rohlingen ist das elektronische Gerät deaktiviert. Nachdem ein Rohling personalisiert worden ist, um beispielsweise einen elektronischen Reisepass oder ein Visum auszustellen, wird das Dokument über eine extern ansprechbare Schaltvorrichtung aktiviert. Dieser Aktivierungsvorgang kann reversibel oder irreversibel ausgebildet sein. Im letzteren Fall kann das Dokument über die extern ansprechbare Schaltvorrichtung zum Beispiel nach Ablauf der Gültigkeit des Dokuments, oder nachdem ein Zugriff auf das Dokument erfolgt ist, auch deaktiviert werden.

Die reversible Aktivierung des Dokuments mit der Möglichkeit der späteren Deaktivierung ist besonders vorteilhaft für die Ausstellung eines Visums. Ein erfindungsgemäßes Visum wird beispielsweise in einen elektronischen Reisepass eingeklebt. Bei der Ausstellung des Visums wird das elektronische Gerät des Visums aktiviert, wobei es sich bei dem elektronischen Gerät beispielsweise um einen RFID-Transponder handelt. Nach Ablauf der Gültigkeit des Visums kann das elektronische Gerät beispielsweise anlässlich einer Ein- oder Ausreise bei einer Visumskontrolle wieder deaktiviert werden. Insbesondere kann die Deaktivierung nach Ablauf einer vorgegebenen Gültigkeitszeitdauer oder nach einer Anzahl von Ein- bzw. Ausreisen erfolgen.

Die Deaktivierung eines zuvor ausgestellten, aber abgelaufenen Visums kann auch anlässlich der Ausstellung eines weiteren Folgevisums erfolgen. Dies hat den Vorteil, dass die Anzahl der aktivierten Visumdokumente in einem elektronischen Reisepass reduziert werden kann. Dadurch lassen sich Interferenzen beim Auslesen der Datenspeicher über eine drahtlose Schnittstelle reduzieren.

In einer Ausführungsform der Erfindung ist durch die extern ansprechbare Schaltvorrichtung ein Sicherheitsmerkmal des Dokuments gegeben. Zur Überprüfung des Dokuments auf Gültigkeit muss die extern ansprechbare Schaltvorrichtung zunächst in geeigneter Form angesprochen werden, um das elektronische Gerät des Dokuments zu aktivieren. Daraufhin kann ein Zugriff auf den Datenspeicher erfolgen. Nach der Überprüfung des Dokuments wird das Gerät über die extern ansprechbare Schaltvorrichtung wieder deaktiviert.

Gemäß der Erfindung hat das Dokument eine zusätzliche Schnittstelle für die extern ansprechbare Schaltvorrichtung, die von der Schnittstelle zum Zugriff auf den Datenspeicher räumlich getrennt sein kann. Hierbei kann es sich um einen extern zugänglichen Kontakt des Dokuments handeln, um beispielsweise die Schaltvorrichtung mit einen Strom oder einer Spannung zu beaufschlagen. Die zusätzliche Schnittstelle kann kontaktbehaftet oder kontaktlos sein, indem der Strom oder die Spannung z.B. durch ein elektromagnetisches Wechseifeld eingekoppelt werden.

Die Schaltvorrichtung ist erfindungsgemäß durch Induktion einer Phasenumwandlung schaltbar. Beispielsweise beinhaltet die Schaltvorrichtung eine Substanz, die von einer leitfähigen, halbleitenden oder nicht leitenden Phase in eine jeweils andere Phase übergeht. Die Induktion einer solchen Phasenumwandlung, beispielsweise von einer metallischen in eine nicht metallische Phase, kann durch geeignete Wahl von Druck und / oder Temperatur induziert werden.

Beispielsweise kann die Schaltvorrichtung hierzu Iod beinhalten, dessen Phase durch Aufbringung eines hohen Drucks umgewandelt werden kann. Die Schaltvorrichtung kann auch Phosphor beinhalten, welches in den Formen weißer, roter, violetter oder schwarzer Phosphor vorliegen kann. Durch geeignete Wahl von Druck und Temperatur kann das Phosphor in seine verschiedenen Zustände überführt werden, beispielsweise aus der leitfähigen Phase des violetten Phosphors in die halbleitende Phase des schwarzen Phosphors.

Wenn eine solche Phase thermodynamisch instabil ist, so geht die Phase nach einer bestimmten Zeit durch erneute Phasenumwandlung wieder zum Beispiel in eine nicht metallische Phase über, so dass der Kontakt wieder unterbrochen wird. Wenn beispielsweise eine leitfähige (metallische) Phase thermodynamisch instabil ist, so erfolgt nach einer bestimmten Zeit eine Phasenumwandlung zur nicht leitfähigen (nicht metallischen) Phase, so dass der Kontakt wieder unterbrochen wird.

Eine Vorrichtung zum Zugriff auf einen Datenspeicher eines Dokuments hat eine Schnittstelle zur Kommunikation mit einer entsprechenden Schnittstelle des Dokuments. Ferner hat die Vorrichtung Mittel zur Aktivierung oder Deaktivierung des elektronischen Geräts, über die das elektronische Gerät unabhängig von den Schnittstellen extern angesprochen werden kann. Beispielsweise ist die Vorrichtung zur Induktion einer Phasenumwandlung ausgebildet.

Bei der Vorrichtung kann es sich um ein Lesegerät handeln, mit Hilfe dessen z.B. eine Pass- und/oder Visumkontrolle durchgeführt werden kann, indem die hierzu erforderlichen Daten aus dem Datenspeicher des Dokuments ausgelesen werden.

Beispielsweise handelt es sich bei der Vorrichtung um ein Personalisierungsgerät zur Personalisierung von zentral hergestellten Rohlingen eines Wert- oder Sicherheitsdokuments. Nachdem eine Personalisierung des Rohlings beispielsweise zur Ausstellung eines elektronischen Reisepasses oder eines Visums durchgeführt worden ist, aktiviert die Vorrichtung das in dem Dokument befindliche elektronische Gerät.

Alternativ oder zusätzlich kann die Vorrichtung auch zur Entwertung bzw. zur Ungültigmachung des Dokuments durch Auslösung eines irreversiblen Schaltvorgangs der extern ansprechbaren Schaltvorrichtung des Dokuments dienen.

Das Aktivierungs- oder Deaktivierungssignal kann auch zu der Schaltvorrichtung kontaktlos oder kontaktbehaftet übertragen werden. Für eine kontaktbehaftete Übertragung kann das Dokument zusätzlich zu seiner Schnittstelle einen separaten externen Anschluss haben, in den das Aktivierungs- oder Deaktivierungssignal eingespeist werden kann.

Im weiteren werden Ausführungsformen der Erfindung mit Bezugnahme auf die Zeichnungen näher erläutert. Es zeigen:
- Figur 1: ein Blockdiagramm einer Ausführungsform des erfindungsgemäßen Dokuments und einer erfindungsgemäßen Vorrichtung für einen Schreib- und / oder Lesezugriff auf das Dokument,
- Figur 2: ein Beispiel der Schaltvorrichtung des Dokuments bei geschlossenen Schaltkontakten,
- Figur 3: die Schaltvorrichtung der Figur 2 bei geöffnetem Schaltkontakt,
- Figur 4: ein weiteres Beispiel der Schaltvorrichtung bei geöffnetem Schaltkontakt,
- Figur 5: die Schaltvorrichtung der Figur 4 bei geschlossenem Schaltkontakt,
- Figur 6: eine Ausführungsform eines erfindungsgemäßen Dokuments mit mehreren Schaltvorrichtungen zum Trennen oder Verbinden der Leiterbahnen einer Antenne,
- Figur 7: eine Ausführungsform eines erfindungsgemäßen Dokuments, bei der die Deaktivierung oder Aktivierung über eine Phasenumwandlung induzierbar ist,
- Figur 8: ein Blockdiagramm einer Ausführungsform eines erfindungsgemäßen Dokuments mit einem entsprechenden Lesegerät.

Elemente in den nachfolgenden Figuren, die einander entsprechen, sind mit gleichen Bezugszeichen gekennzeichnet.

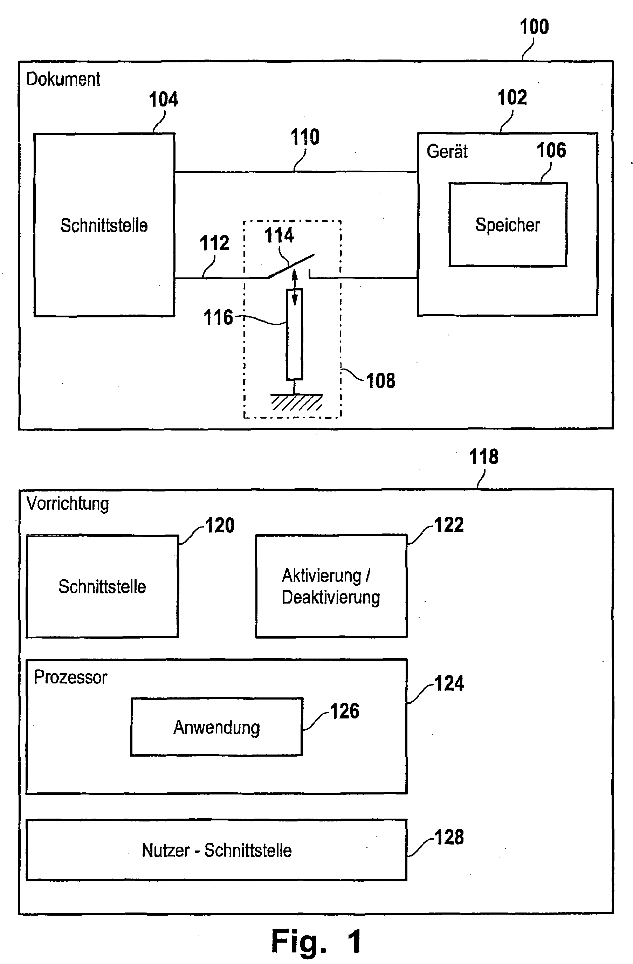

Die Figur 1 zeigt das Blockdiagramm eines Dokuments 100 mit einem elektronischen Gerät 102. Das elektronische Gerät 102 ist mit dem Dokument 100 fest verbunden. Beispielsweise ist das elektronische Gerät 102 in einer Schicht des Dokuments 100 eingebettet, wie zum Beispiel einlaminiert.

Beispielsweise beinhaltet das elektronische Gerät 102 ein Modul, welches einen integrierten elektronischen Schaltkreis umfasst. An das Gerät 102 ist eine kontaktbehaftete oder kontaktlose Schnittstelle 104 angeschlossen, wie zum Beispiel eine Antenne, die in mehreren Windungen entlang eines Randbereichs des Dokuments 100 verläuft.

Das Dokument 100 kann einen Träger aus Papier oder Kunststoff aufweisen oder aus mehreren Papier- und / oder Kunststoffschichten bestehen. Insbesondere kann das Dokument 100 als sogenannte Chipkarte realisiert sein, wobei in diesem Fall das Modul des Geräts 102 als sogenanntes Chipkartenmodul ausgebildet ist. Zu an sich vorbekannten Chipkartenmodulen und Standards wird hierzu auf das das "Handbuch der Chipkarten", Wolfgang Rankl, Wolfgang Effing, Hansa Verlag 1999 verwiesen, insbesondere Kapitel 3.2.2 auf Seite 71 ff.

Bei dem Dokument 100 kann es sich um ein Wert- oder Sicherheitsdokument handeln, insbesondere um ein Identifikationsdokument, wie zum Beispiel einen Personalausweis, Reisepass oder ein Visum.

Das elektronische Gerät 102 beinhaltet einen vorzugsweise nicht-flüchtigen elektronischen Speicher 106. Beispielsweise sind in dem Speicher 106 Daten zur Person des Trägers des Dokuments 100 gespeichert, wie zum Beispiel Name, Anschrift, Geburtsdatum, Geschlecht sowie das Ausstellungsdatum, die Gültigkeit und / oder die ausstellende Behörde des Dokuments 100. Alternativ oder zusätzlich können auch biometrische Daten, wie zum Beispiel Fingerabdruckdaten oder andere biometrische Daten des Trägers des Dokuments 100 in dem Speicher 106 für eine Überprüfung der Gültigkeit des Dokuments 100 abgelegt sein. Dies ist insbesondere zur Realisierung eines elektronischen Reisepasses oder eines elektronischen Visums vorteilhaft.

Für einen Zugriff auf den Speicher 106 ist es erforderlich, dass das elektronische Gerät 102 aktiviert ist. Die Aktivierung des elektronischen Geräts 102 erfolgt mittels einer extern ansprechbaren Schaltvorrichtung 108. In der hier betrachteten Ausführungsform ist das elektronische Gerät 102 über Leiterbahnen 110 und 112 mit der Schnittstelle 104 verbunden, wobei die Leiterbahn 112 durch ein Schaltelement 114 der Schaltvorrichtung 108 unterbrochen ist. Bei geöffnetem Schaltelement 114 ist das elektronische Gerät 102 deaktiviert, da es von seiner Schnittstelle 104 getrennt ist. Ein Zugriff auf den Speicher 106 ist also in diesem Zustand nicht möglich.

Die Schaltvorrichtung 108 hat ein Element 116, welches auf das Schaltelement 114 wirken kann. Das Element 116 ist extern ansprechbar, um das Schaltelement 114 reversibel oder irreversibel zu öffnen oder zu schließen, um dadurch das Gerät 102 reversibel oder irreversibel zu aktivieren oder zu deaktivieren.

Das Element 116 kann auch aus einer Substanz bestehen, die durch eine induzierbaren Phasenumwandlung zwischen einer leitfähigen und einer nicht-leitfähigen Phase überführt werden kann.

Die Schaltvorrichtung 108 ist durch eine externe Vorrichtung 118 ansprechbar.

Bei der Vorrichtung 118 kann es sich um ein Schreib- und / oder Lesegerät zum Zugriff auf den Speicher 106 des Dokuments 100 handeln. Ferner kann es sich bei der Vorrichtung 118 um ein Personalisierungsgerät oder um ein Gerät zur Entwertung oder Ungültigmachung des Dokuments 100 handeln.

Die Vorrichtung 118 hat eine Schnittstelle 120, eine Komponente 122 zur Aktivierung und / oder Deaktivierung des Geräts 102, zumindest einen Mikroprozessor 124 zur Ausführung von Programminstruktionen 126 eines Anwendungsprogramms sowie eine Nutzer-Schnittstelle 128, die beispielsweise als graphische Nutzer-Schnittstelle ausgebildet ist.

Durch Ansteuerung der Komponente 122 kann der Mikroprozessor 124 aufgrund seiner Ausführung entsprechender Programminstruktionen 126 die Schaltvorrichtung 108 ansprechen, um das elektronische Gerät 102 zu aktivieren oder zu deaktivieren. Wenn ein Schreib- und / oder Lesezugriff auf den Speicher 106 erfolgen soll, steuert der Prozessor 124 zunächst die Komponente 122 an, so dass diese die Schaltvorrichtung 108 anspricht, um das Schaltelement 114 zu schließen, und so das elektronische Gerät 102 zu aktivieren. Nach der Aktivierung des elektronischen Geräts 102 ist dieses mit seiner Schnittstelle 104 verbunden, so dass der Mikroprozessor 124 über die entsprechende Schnittstelle 120 der Vorrichtung 118 eine Kommunikationsverbindung mit dem Gerät 102 für die Durchführung des Schreib- und / oder Lesezugriffs auf den Speicher 106 aufbauen kann.

Die Komponente 122 ist entsprechend der Ausführungsform der Schaltvorrichtung 108 ausgebildet. Beispielsweise ist die Komponente 122 so ausgebildet, dass das Dokument 100 in die Vorrichtung 118 eingeführt werden kann, so dass innerhalb der Vorrichtung 118 durch die Komponente 122 die Umgebungsparameter für das Dokument 100 so eingestellt werden, dass die Schaltvorrichtung 108 angesprochen wird.

Beispielsweise wird durch die Komponente 122 durch geeignete Einstellung von Druck und Temperatur über die Vorrichtung 118 eine Phasenumwandlung im Element 108, beispielsweise von einer nicht leitfähigen in eine metallische Phase induziert, um die Schaltvorrichtung durchzuschalten.

Ferner kann die Komponente 122 als zusätzliche, von der Schnittstelle 120 räumlich getrennte Schnittstelle ausgebildet sein, um mit einem externen Kontakt der Schaltvorrichtung 108 zu kontaktieren.

Wenn es sich bei dem Dokument 100 um einen elektronischen Reisepass oder ein Visum handelt, wird beispielsweise wie folgt vorgegangen:
Von einer zentralen Stelle wird ein Rohling des Dokuments 100 an die ausstellende Behörde geliefert. In diesem Zustand befindet sich das elektronische Gerät 102 in einem deaktivierten Zustand, das heißt das Schaltelement 114 ist geöffnet.

Zur Aufstellung des elektronischen Reisepasses bzw. des Visums, wird der Rohling des Dokuments 100 in die Vorrichtung 118 gelegt. Über die Nutzer-Schnittstelle 128 werden manuell oder maschinell Daten eingegeben, wie zum Beispiel personenbezogene Angaben und / oder biometrische Daten, die in dem elektronischen Speicher 106 gespeichert werden sollen.

Hierzu startet ein Benutzer die Anwendung, so dass die Programminstruktionen 126 von dem Mikroprozessor 124 ausgeführt werden. Aufgrund dessen steuert der Mikroprozessor 124 die Komponente 122 an, um die Schaltvorrichtung 108 des Dokuments 100 anzusprechen, so dass das Schaltelement 114 geschlossen und das elektronische Gerät 102 aktiviert wird.

Danach steuert der Mikroprozessor 124 die Schnittstelle 120 an, um über die Schnittstelle 104 eine Kommunikationsverbindung mit dem Dokument 100 aufzubauen. Der Mikroprozessor 124 steuert dann die Übertragung der über die Nutzer-Schnittstelle 128 eingegebenen Daten von der Schnittstelle 120 zu der Schnittstelle 104, so dass die Daten in dem elektronischen Speicher 106 des Geräts 102 abgelegt werden. Vorzugsweise verläuft dieser Schreibvorgang unter Verwendung eines kryptographischen Protokolls, um Missbrauch zu verhindern.

Nachdem die Personalisierung des Dokuments 100 aufgrund des Speicherns der Daten in dem elektronischen Speicher 106 abgeschlossen worden ist, kann der Mikroprozessor 124 je nach Ausführungsform und Verwendungszweck die Komponente 122 erneut ansteuern, um das elektronische Gerät 102 wieder zu deaktivieren.

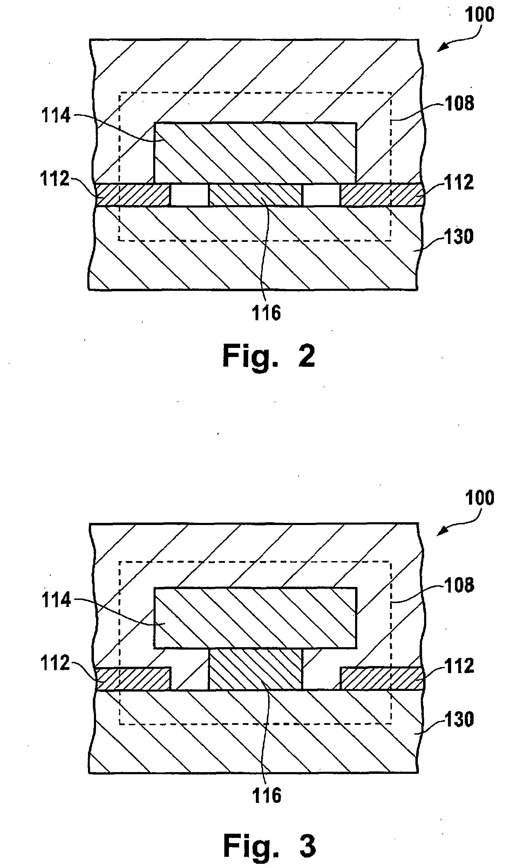

Die Figur 2 zeigt einen Teilschnitt des Dokuments 100 mit einer Detailansicht einer Ausführungsform der Schaltvorrichtung 108, die nicht Teil der Erfindung ist.

Das Dokument 100 hat in der Ausführungsform der Figur 2 einen Träger 130, auf dem sich die Leiterbahn 112 befindet. Die Leiterbahn 112 ist unterbrochen, wobei die Unterbrechung durch das Schaltelement 114 überbrückt wird. Auf dem Träger 130 befindet sich im Bereich der Unterbrechung der Leiterbahn 112 unterhalb des Schaltelements 114 das Element 116.

Die Figur 3 zeigt die Schaltvorrichtung 108 nach Auslösung eines Formänderungseffekts. Aufgrund des Formänderungseffekts hat das Element 116 seine Form so geändert, dass das Schaltelement 114 angehoben worden ist, so dass es nicht mehr mit den Leiterbahnen 112 kontaktiert. Dadurch wird das elektronische Gerät 102 deaktiviert, indem es beispielsweise von seiner Schnittstelle 104 getrennt wird.

Die Schaltvorrichtung 108 kann aber auch integraler Bestandteil des elektronischen Geräts 102 oder dessen Schnittstelle 104 sein.

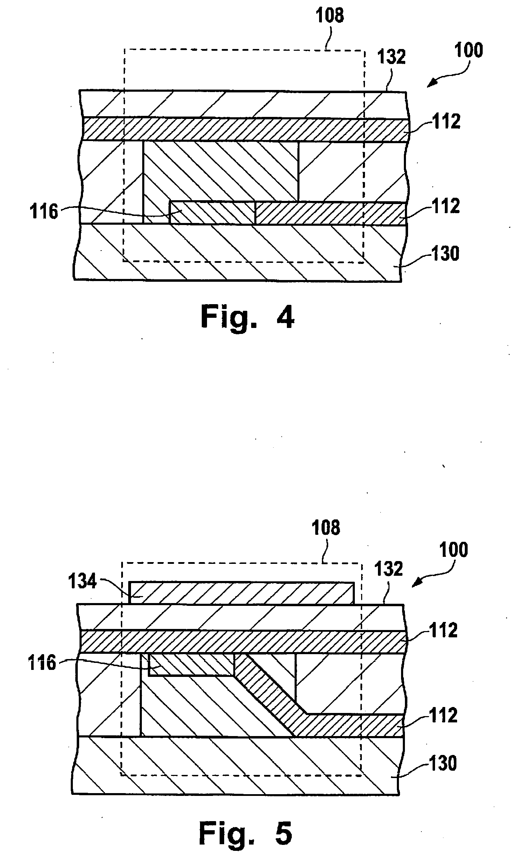

Die Figur 4 zeigt ein Dokument 100, das nicht Teil der Erfindung ist und bei dem die unterbrochenen Leiterbahnen 112 räumlich versetzt übereinander verlaufen. Das Element 116 ist mit einer der beiden Leiterbahnen 112 fest verbunden. Das Element 116 hat z.B. ferromagnetische, bevorzugt superparamagnetische Eigenschaften.

Wenn auf die Oberfläche 132 des Dokuments 100 ein Aufkleber 134 aufgeklebt wird, der permanentmagnetische Partikel enthält, so wird das Element 116 angezogen und biegt sich nach oben, bis es die andere Leiterbahn 112 erreicht, so dass der Kontakt geschlossen wird, wie in der Figur 5 dargestellt.

Das Element 116, welches den elektrischen Kontakt realisiert, kann zum Beispiel Eisen, Nickel, Kobalt, deren Legierungen bzw. deren Verbindungen beinhalten.

Auf dem Aufkleber 134 kann ein Verfallsdatum aufgedruckt sein. Nach Erreichen des Verfallsdatums kann der Aufkleber 134 abgezogen werden, so dass das Element 116 in seine in der Figur 4 gezeigte Form zurückgeht, wodurch der Kontakt geöffnet wird.

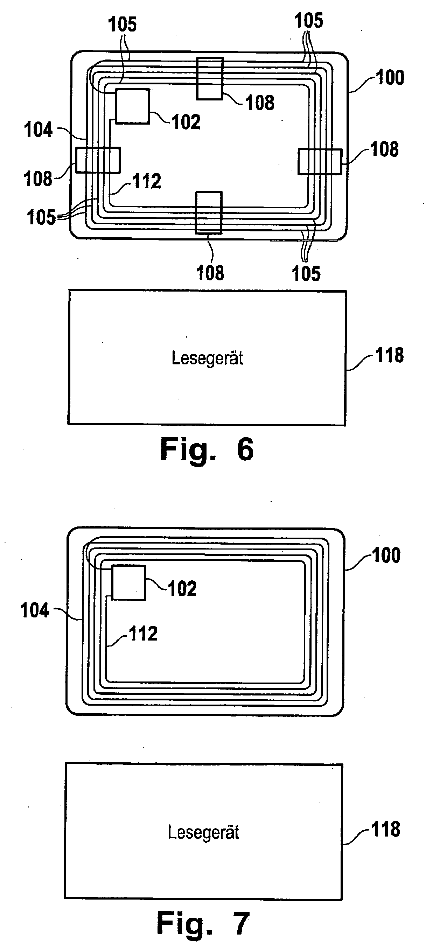

Die Figur 6 zeigt eine Ausführungsform des Dokuments 100, bei der die Schnittstelle 104 als Antenne realisiert ist. Die Leiterbahn 112 der Antenne ist mehrfach durch Schaltvorrichtungen 108 unterbrochen, woraus eine Vielzahl von Antennensegmenten 105 resultiert.

Zur Aktivierung des elektronischen Geräts 102 werden die Schaltvorrichtungen 108 von dem Lesegerät 118 angesprochen, um die entsprechenden Kontakte zu schließen und so die Antennensegmente 105 miteinander zu verbinden. Dadurch wird die Antenne der Schnittstelle 104 funktionsfähig und das elektronische Gerät 102 ist damit von dem Lesegerät 118 ansteuerbar. Nach einem von dem Lesegerät 118 durchgeführten Lesezugriff, werden die Schaltvorrichtungen 108 erneut von dem Lesegerät 118 angesprochen, um die Kontakte wieder zu öffnen und so die Antennensegmente 105 elektrisch voneinander zu trennen.

Dies hat den Vorteil, dass die Antenne der Schnittstelle 104 nur dann realisiert ist, wenn ein Zugriff auf das elektronische Gerät 102 erfolgen soll. Hierdurch können elektromagnetische Interferenzen und Beeinflussungen der Antenne der Schnittstelle 104 mit unmittelbar benachbart angeordneten Antennen weiterer Dokumente reduziert werden.

Dies ist insbesondere vorteilhaft zur Realisierung eines elektronischen Visums. Ein solches elektronisches Visum wird in einen elektronischen Reisepass integriert, indem es dort beispielsweise eingeklebt wird. Der elektronische Reisepass selbst kann einen Transponder mit einer Antenne aufweisen sowie auch weitere elektronische Visa mit entsprechenden Antennen und Transpondern.

Hierbei tritt das Problem auf, dass die einzelnen Antennen in unmittelbarer Nachbarschaft, beispielsweise bei geschlossenem Reisepass übereinander angeordnet sind, so dass es zu entsprechend starken Wechselwirkungen zwischen den einzelnen Antennen kommen kann. Diese Wechselwirkungen können einen Zugriff auf die einzelnen Visa bzw. den elektronischen Reisepass erschweren oder sogar unmöglich machen. Dieses Problem wird dadurch gelöst, dass die Antennen des elektronischen Reisepasses bzw. der elektronischen Visa nur dann durch Verschalten der einzelnen Antennensegmente gebildet werden, wie anhand der Figur 6 erläutert, wenn ein entsprechender Zugriff erfolgen soll.

Die Figur 7 zeigt eine Ausführungsform des Dokuments 100, die der Ausführungsform der Figur 6 entspricht, wobei die Leiterbahn 112 durch eine Substanz gebildet wird, die durch Induktion einer Phasenumwandlung von einem nicht-leitfähigen Zustand in einen leitfähigen Zustand überführt werden kann. Eine hierfür geeignete Substanz ist beispielsweise Iod oder Phosphor.

Wenn durch das Lesegerät 118 auf das elektronische Gerät 102 bzw. die darin gespeicherten Daten zugegriffen werden soll, induziert das Lesegerät 118 zunächst eine geeignete Phasenumwandlung, um die Leiterbahnen 112 in deren leitfähigen Zustand zu überführen. Falls die leitfähige Phase thermodynamisch instabil ist, erfolgt nach einem gewissen Zeitraum automatisch eine Rücktransformation in die nicht leitende Phase.

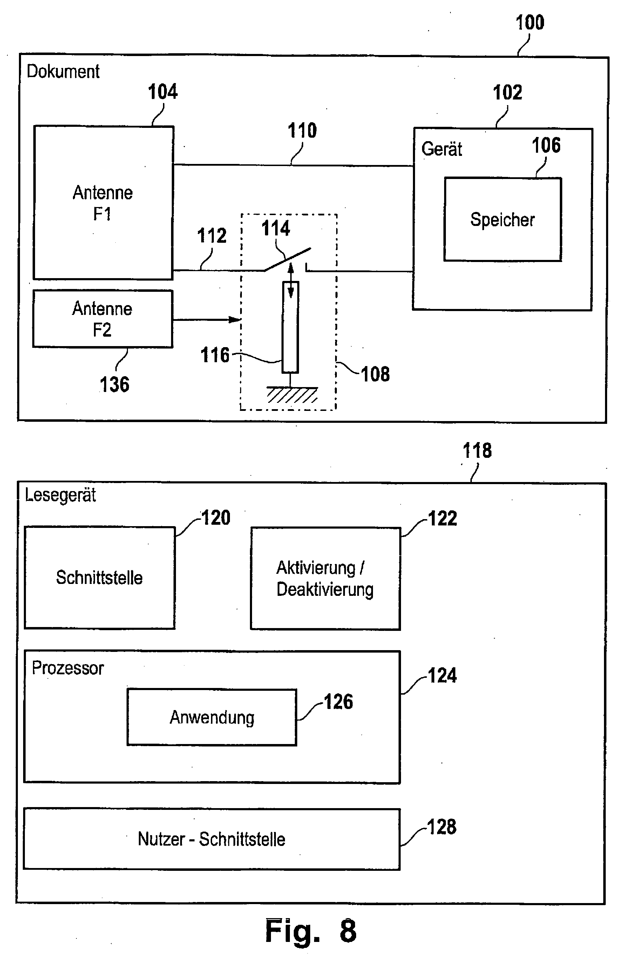

Die Figur 8 zeigt das Blockdiagramm einer Ausführungsform des Dokuments 100, bei der die Schnittstelle 104 als eine Antenne ausgebildet ist, die einen Empfangsfrequenzbereich F1 hat. Das Dokument 100 hat eine weitere Antenne 136, die einen Empfangsfrequenzbereich F2 hat, wobei die Empfangsfrequenzbereiche F1 und F2 nicht überlappend sind. Vorzugsweise sind die Empfangsfrequenzbereiche F1 und F2 deutlich voneinander verschieden; beispielsweise liegt der Empfangsfrequenzbereich F1 im Megaherzbereich, wohingegen der Empfangsfrequenzbereich F2 im Bereich von einigen KHz liegen kann.

Die Antenne 136 ist mit der Schaltvorrichtung 108 verbunden. Das Element 116 kann bei dieser Ausführungsform so ausgebildet sein, wie mit Bezugnahme auf die Figur 1 oben beschrieben. Bei der hier betrachteten Ausführungsform kann es sich bei dem Element 116 auch um einen von der Antenne 136 steuerbaren Halbleiterschalter oder eine aus mehreren Halbleiter-Schaltern bestehende Schaltung handeln, wie zum Beispiel eine bistabile Kippschaltung, d.h. einen Flip-Flop.

Die Komponente 122 ist in der hier betrachteten Ausführungsform zur Sendung von elektromagnetischen Wellen in dem Frequenzbereich F2 ausgebildet. Zur Aktivierung oder Deaktivierung des elektronischen Geräts 102 steuert also der Mikroprozessor 124 hierzu die Komponente 122 an, so dass diese in dem Frequenzbereich F2 zumindest einen elektromagnetischen Impuls abgibt, der von der Antenne 136 empfangen wird. Beispielsweise ist die Antenne 136 mit der Basis eines Transistors oder mit einem Eingang einer bistabilen Kippschaltung verbunden, so dass aufgrund des von der Antenne 136 empfangenen Impulses, die Unterbrechung der Leiterbahn 112 überbrückt wird oder geöffnet wird.

Nach der Aktivierung des elektronischen Geräts 102 kann der Mikroprozessor 124 über die Schnittstellen 120 und 104 auf das elektronische Gerät 102 zugreifen.

Je nach Ausführungsform ist es während der gesamten Dauer des Zugriffs erforderlich, dass die Komponente 122 eine elektromagnetische Welle im Frequenzbereich F2 aussendet, damit die Unterbrechung der Leiterbahn 112 durch die Schaltvorrichtung 104 überbrückt bleibt.

Alternativ ist es auch möglich, dass die Komponente nur zur Aktivierung, das heißt zur Überbrückung der Unterbrechung der Leiterbahn 112, bzw. zur nachfolgenden Deaktivierung einen elektromagnetischen Impuls im Frequenzbereich F2 abgibt. Dies ist insbesondere dann der Fall, wenn die Schaltvorrichtung 108 eine bistabile Kippschaltung beinhaltet, die durch Empfang eines elektromagnetischen Impulses durch die Antenne 136 zwischen ihren beiden Schaltzuständen hin und her wechselt.

Die in der Figur 8 gezeigte Ausführungsform ist besonders zur Realisierung elektronischer Visa vorteilhaft, insbesondere, wenn in einem elektronischen Reisepass mehrere solcher Visa vorhanden sind. Die verschiedenen Visa und auch der Reisepass haben vorzugsweise eine zusätzliche Antenne (vgl. Antenne 136 der Figur 8), wobei die verschiedenen Antennen 136 nicht überlappende Frequenzbereiche F2 haben. Die einzelnen Empfangsfrequenzbereiche F2 des elektronischen Reisepasses bzw. der einzelnen Visa können beispielsweise um jeweils mehrere KHz voneinander beabstandet sein.

Durch Wahl eines Frequenzbereichs F2 für die Aussendung einer elektromagnetischen Welle durch die Komponente 122 ist so der elektronische Reisepass bzw. ein bestimmtes Visum des elektronischen Reisepasses gezielt aktivierbar oder deaktivierbar.

Beispielsweise hat der elektronische Reisepass selbst eine global festgelegte und dem Lesegerät bekannte Empfangsfrequenz F2. In dem Speicher 106 des elektronischen Geräts 102 des Reisepass kann eine Tabelle abgelegt sein, die die Empfangsfrequenzbereiche der in dem elektronischen Reisepass befindlichen Visa beinhaltet. Diese Tabelle wird von dem Lesegerät 118 zunächst ausgelesen, bevor mit Hilfe dieser Tabelle zielgerichtet auf ein bestimmtes Visum zugegriffen wird.

### Bezugszeichenliste

- 100: Dokument
- 102: elektronisches Gerät
- 104: Schnittstelle
- 106: Speicher
- 108: Schaltvorrichtung
- 110: Leiterbahn
- 112: Leiterbahn
- 114: Schaltelement
- 116: Element
- 118: Vorrichtung
- 120: Schnittstelle
- 122: Komponente
- 124: Mikroprozessor
- 126: Programminstruktionen
- 128: Nutzer-Schnittstelle
- 130: Träger
- 132: Oberfläche
- 134: Aufkleber
- 136: Antenne

## Patentansprüche

1. Dokument, das ein elektronisches Gerät (102) enthält,
wobei das elektronische Gerät einen Datenspeicher (106) aufweist,
mit einer Schnittstelle (104) zum Zugriff auf das Gerät
und mit einer extern ansprechbaren Schaltvorrichtung (108) zur Aktivierung oder Deaktivierung des elektronischen Geräts,
wobei nach einer Aktivierung auf die gespeicherten Daten zugegriffen werden kann und nach einer Deaktivierung kein Zugriff auf den Datenspeicher (106) möglich ist,
**dadurch gekennzeichnet, dass**
die Schaltvorrichtung eine an das elektronische Gerät (102) gekoppelte Substanz (112) beinhaltet,
wobei die Schaltvorrichtung (108) durch eine Induktion einer Phasenumwandlung der Substanz (112) von einer leitenden, halbleitenden oder nichtleitenden Phase in eine jeweils andere Phase schaltbar ist,
und wobei bei aktiviertem elektronischen Gerät (102) ein Strom durch die Schaltvorrichtung (108) fließen kann.

2. Dokument nach Patentanspruch 1, wobei die Schaltvorrichtung zur Induktion der Phasenumwandlung unabhängig von der Schnittstelle (104) des Geräts (102) extern ansprechbar ist.

3. Dokument nach einem der vorhergehenden Ansprüche, wobei die Schaltvorrichtung (108) zwischen der Schnittstelle (104) und dem Datenspeicher (106) angeordnet ist.

4. Dokument nach einem der vorhergehenden Ansprüche, wobei es sich bei dem elektronischen Gerät (102) um einen Transponder handelt.

5. Dokument nach einem der vorhergehenden Ansprüche, wobei die Schaltvorrichtung (108) Teil des elektronischen Geräts (102) und / oder der Schnittstelle (104) ist.

6. Dokument nach einem der vorhergehenden Ansprüche, wobei es sich um ein Wert- oder Sicherheitsdokument, insbesondere ein Visum, Identifikationskarte, Reisepass, Personalausweis, Führerschein, Kreditkarte, Kundenausweis, Fahrausweis oder dergleichen handelt.

7. Dokument nach einem der vorhergehenden Ansprüche, wobei das Dokument als Chipkarte ausgebildet ist.

## Claims

1. Document which contains an electronic device (102),
the electronic device having a data memory (106),
with an interface (104) for accessing the device,
and with an externally addressable switching apparatus (108) for activating or deactivating the electronic device,
the stored data being able to be accessed following activation and the data memory (106) not being able to be accessed following deactivation,
**characterized in that**
the switching apparatus comprises a substance (112) which is coupled to the electronic device (102),
the switching apparatus (108) being able to be switched by inducing a phase transformation of the substance (112) from a conductive, semiconductive or non-conductive phase to a respective other phase,
and a current being able to flow through the switching apparatus (108) when the electronic device (102) is activated.

2. Document according to Patent Claim 1, the switching apparatus being able to be externally addressed independently of the interface (104) of the device (102) in order to induce the phase transformation.

3. Document according to one of the preceding claims, the switching apparatus (108) being arranged between the interface (104) and the data memory (106).

4. Document according to one of the preceding claims, the electronic device (102) being a transponder.

5. Document according to one of the preceding claims, the switching apparatus (108) being part of the electronic device (102) and/or the interface (104).

6. Document according to one of the preceding claims, said document being a valuable or security document, in particular a visa, an ID card, a passport, a personal identity card, a driving licence, a credit card, a customer identity card, a travel ticket or the like.

7. Document according to one of the preceding claims, the document being in the form of a chip card.

## Revendications

1. Document contenant un appareil électronique (102),
dans lequel l'appareil électronique comporte une mémoire de données (106),
avec une interface (104) pour actionner l'appareil et avec un dispositif de commutation (108) pouvant être actionné de l'extérieur pour l'activation ou la désactivation de l'appareil électronique,
dans lequel on peut accéder aux données mémorisées après une activation et aucun accès à la mémoire de données (106) n'est possible après une désactivation,
**caractérisé en ce que**
le dispositif de commutation contient une substance (112) couplée à l'appareil électronique (102),
le dispositif de commutation (108) pouvant être commuté d'une phase conductrice, semi-conductrice ou non conductrice respectivement vers une autre phase par l'induction d'un changement de phase de la substance (112),
et un courant pouvant circuler à travers le dispositif de commutation (108) lorsque l'appareil électronique (102) est activé.

2. Document selon la revendication 1, dans lequel le dispositif de commutation pour l'induction du changement de phase peut être actionné de l'extérieur indépendamment de l'interface (104) de l'appareil (102).

3. Document selon une des revendications précédentes, dans lequel le dispositif de commutation (108) est disposé entre l'interface (104) et la mémoire de données (106).

4. Document selon une des revendications précédentes, dans lequel l'appareil électronique (102) est un transpondeur.

5. Document selon une des revendications précédentes, dans lequel le dispositif de commutation (108) fait partie de l'appareil électronique (102) et/ou de l'interface (104).

6. Document selon une des revendications précédentes, dans lequel il s'agit d'un document de valeur ou de sécurité, notamment un visa, une carte d'identification, un passeport, une carte d'identité, un permis de conduire, une carte de crédit, une carte de client, une carte de transport ou similaire.

7. Document selon une des revendications précédentes, dans lequel le document est réalisé sous la forme d'une carte à puce.
